# EUROPÄISCHE PATENTSCHRIFT

(11) **EP 1 257 886 B1**
(45) Veröffentlichungstag und Bekanntmachung des Hinweises auf die Patenterteilung: **05.04.2006**
(21) Anmeldenummer: 01953029.4
(22) Anmeldetag: 26.01.2001
(51) Int. Cl.: G05B 19/409

(54) **BEDIENEINHEIT FÜR EINE WERKZEUGMASCHINE ODER EIN KOORDINATENMESSGERÄT**
CONTROL UNIT FOR A MACHINE TOOL OR CO-ORDINATE MEASURING EQUIPMENT
UNITE DE COMMANDE POUR UNE MACHINE-OUTIL OU UN APPAREIL DE MESURE DE COORDONNEES

(30) Priorität: 18.02.2000 DE 10007508; 03.03.2000 DE 10010128
(43) Veröffentlichungstag der Anmeldung: 20.11.2002
(73) Patentinhaber: Carl Zeiss Industrielle Messtechnik GmbH, 73447 Oberkochen (DE)
(72) Erfinder: WALTHER, Jörg, 89547 Gerstetten (DE); HAUG, Helmut, 73760 Ostfildern (DE); WIDMAIER, Reinhold, 73430 Aalen (DE); VOGEL, Gunnar, 6842 Kolbach (AT); BEERHALTER, Rainer, 70199 Stuttgart (DE)
(74) Vertreter: Henckell, Carsten
(86) Internationale Anmeldenummer: PCT/EP2001/000851
(87) Internationale Veröffentlichungsnummer: WO 2001/061427

(56) Entgegenhaltungen:
- EP-A- 0 061 839
- EP-A- 0 525 531
- EP-A- 0 861 709
- DE-A- 3 813 590
- DE-U- 29 619 713
- US-A- 5 808 434
- "DISPLAYSYSTEM FUER DEN MASCHINENBAU" , ZWF ZEITSCHRIFT FUR WIRTSCHAFTLICHE FERTIGUNG UND AUTOMATISIERUNG,DE,CARL HANSER VERLAG. MUNCHEN, VOL. 93, NR. 4, PAGE(S) 158 XP000742599 ISSN: 0947-0085 das ganze Dokument
- KLING J ET AL: "NEUHEITEN DER NUMERISCHEN STEUERUNGSTECHNIK" , ZWF ZEITSCHRIFT FUR WIRTSCHAFTLICHE FERTIGUNG UND AUTOMATISIERUNG,DE,CARL HANSER VERLAG. MUNCHEN, VOL. 86, NR. 9, PAGE(S) 475-480 XP000228768 ISSN: 0947-0085 Seite 476, Absatz 2; Abbildungen 1,2,5

## Beschreibung

Die Erfindung betrifft eine Bedieneinheit für eine Werkzeugmaschine oder ein Koordinatenmeßgerät, wobei die Bedieneinheit als wesentlichen Bestandteil ein Bedienpult für die Werkzeugmaschine oder das Koordinatenmeßgerät umfaßt.

Derartige Bedieneinheiten mit einem Bedienpult sind bereits seit längerer Zeit bekannt und dienen insbesondere dazu, daß der Benutzer der Werkzeugmaschine oder des Koordinatenmeßgerätes wichtige Informationen, wie beispielsweise die Lage der Bearbeitungsschlitten bei einer Werkzeugmaschine oder die Position der Tastkugel bei einer Koordinatenmeßmaschine entfernt vom Meßrechner auslesen kann. Das Bedienpult weist zur Anzeige der entsprechenden Informationen ein LCD-Display auf, auf dem selektiv die entsprechenden Informationen dargestellt werden können. Das Bedienpult dient ferner bei Werkzeugmaschinen mit elektrischen Antrieben oder bei Koordinatenmeßgeräten mit elektrischen Antrieben dazu, daß die Antriebe der Werkzeugmaschine oder des Koordinatenmeßgerätes über entsprechende Bedienelemente, wie beispielsweise Steuerhebel, verfahren werden können, oder daß andere Funktionen der Werkzeugmaschine oder des Koordinatenmeßgerätes, wie beispielsweise der Wechsel des Bearbeitungswerkzeuges bei einer Werkzeugmaschine oder der Wechsel des Taststiftes bei einem Koordinatenmeßgerät vom Bedienpult ausgelöst werden können.

Da das Bedienpult über ein relativ langes Bus- Kabel mit der Steuerung der Werkzeugmaschine oder des Koordinatenmeßgerätes verbunden ist, kann das Bedienpult sehr einfach an unterschiedlichen Orten plaziert werden, so daß insbesondere bei großen Koordinatenmeßgeräten, deren Meßtische oftmals Längen von mehr als 10m aufweisen, sich der Bediener immer in der Nähe des zu vermessenden Werkstückes aufhalten kann um von hier aus wichtige Informationen abzurufen oder gegebenenfalls die Funktionen des Koordinatenmeßgerätes zu bedienen.

Die Funktionalität der bereits bekannten und bis heute verwendeten Bedienpulte ist jedoch aufgrund des hierbei verwendeten LCD Displays, das lediglich alphanumerische Informationen anzeigen kann, sehr stark begrenzt. Es wäre insbesondere wünschenswert wenn der Bediener des Koordinatenmeßgerätes vor Ort nicht nur Zugriff auf die Steuerung hätte sondern insbesondere auch Zugriff auf den Rechner der Werkzeugmaschine oder des Koordinatenmeßgerätes hätte.

Die EP 0 525 531 A2 zeigt ein ortsfest an einer Bearbeitungsmaschine oder einer Messmaschine angeordnetes Steuerpult, mit einem Rechner, einem Bildschirm, einer Tastatur und Bedienelementen, das über ein Interface mit der Steuerung der Bearbeitungsmaschine oder der Messmaschine verbunden ist. Dabei kann über einen Schalter der Inhalt des Bildschirms wahlweise auf die Graphikkarte des internen Rechners oder aber auf einen durch die Steuerung dargestellten Editor umgeschaltet werden.

Die EP 0 851 401 A2 zeigt eine Schaltung, mit der die horizontale und vertikale Ausdehnung eines Videosignals ermittelt werden kann und so verändert werden kann, dass eine voreingestellte horizontale und vertikale Ausdehnung auf einem Bildschirm erzielt wird.

Hiervon ausgehend liegt unserer Erfindung die Aufgabe zugrunde, eine universell einsetzbare Bedieneinheit mit einem Bedienpult oben genannter Art vorzuschlagen, mit dem es insbesondere möglich ist in größerer Entfernung vom Rechner diesen zu bedienen.

Die Aufgabe wird gelöst durch eine Bedieneinheit gemäß dem unabhängigen Anspruch 1 und durch ein entsprechendes Koordinatenmeßgerät mit einer solchen Bedieneinheit gemäß dem unabhängigen Anspruch 2.

Der Grundgedanke unserer Erfindung ist hierbei darin zu sehen, daß einerseits ein Bedienpult mit wenigstens einem Bedienelement und einem Bildschirm vorgesehen wird, wobei das Bedienelement und der Bildschirm mit einem Rechner einer Werkzeugmaschine oder eines Koordinatenmeßgerätes verbunden werden kann und ferner ein Wandler vorgesehen wird, der das Bildschinasignal des Rechners so expandiert oder komprimiert, daß unabhängig von der Bildauflösung des durch den Rechner abgegebenen Bildschirmsignals der gesamte Inhalt des Bildschirms auf dem Bedienpult mit dem Bildschirminhalt des Rechners ausgefüllt ist.

Alleine einen Bildschirm auf dem Bedienpult vorzusehen, der mit dem Rechner der Werkzeugmaschine oder des Koordinatenmeßgerätes verbunden wird, reicht nämlich zur Lösung der Aufgabe nicht aus, weil die unterschiedlichen Werkzeugmaschinen oder die Koordinatenmeßgeräte vollkommen unterschiedliche Rechnertypen oder Softwarepakete mit völlig unterschiedlichen Bildauflösungen aufweisen.

Eine derartige Bedieneinheit weist nunmehr den erheblichen Vorteil auf, daß einerseits eine Bedieneinheit geschaffen wurde, mit der entfernt vom Rechner der Werkzeugmaschine oder vom Koordinatenmeßgerät der Rechner der Werkzeugmaschine oder des Koordinatenmeßgerätes bedient werden kann und diese Bedieneinheit zusätzlich noch universell mit einer Vielzahl von unterschiedlichen Rechnern einsetzbar ist.

Als Bildschirm ist hierbei grundsätzlich jeder Bildschirm denkbar. Aufgrund der Tatsache, daß das Bedienpult vom Bediener häufig versetzt werden muß, sollte jedoch kein Röhrenbildschirm verwendet werden, sondern ein sehr leichtes TFT Display.

Als Wandler ließe sich prinzipiell ein Mikrocontroller denken, in den die jeweilige Auflösung des betreffenden Rechners eingegeben wird und der entsprechend den eingegebenen Daten das Bildschirmsignal des Rechners so expandiert oder komprimiert, daß der gesamte Inhalt des Bildschirms auf dem Bedienpult mit dem Bildschirminhalt des Rechners ausgefüllt ist.

Besonders vorteilhaft wird man jedoch den Mikrocontroller derart ausgestalten, daß dieser automatisch das von dem Rechner abgegebene Bildschirmsignal auf seine horizontale und vertikale Auflösung hin analysiert und automatisch entsprechend dieser Analyse die Expansion oder die Komprimierung durchführt.

Der Wandler kann hierbei integraler Bestandteil des Bedienpultes sein oder aber auch rechnerseitig untergebracht werden.

Als Bedienelemente sollten auf dem Bedienpult wenigstens eine Tastatur und/oder eine Maus-Bedieneinheit vorgesehen sein, die jeweils ebenfalls mit dem Rechner verbunden sind, so daß die Eingaben an dem betreffenden Bedienelement an den Rechner weitergeleitet werden. Zusätzlich kann im Bedienpult auch ein Lautsprecher vorgesehen sein, der ebenfalls mit dem Rechner verbunden ist und die entsprechenden Klangausgaben des Rechners ausgibt.

Die Maus-Bedieneinheit könnte beispielsweise eine handelsübliche Computermaus, ein Trackball oder ein Mouse-Pad sein.

Die Bedienelemente und/oder der Bildschirm und/oder der Lautsprecher können hierbei mit dem Rechner über Kabel verbunden sein oder aber kontaktlos mit dem Rechner verbunden sein.

Wenn der Abstand vom Bedienpult zum Rechner einige Meter überschreitet, so sollten bei der Verwendung von Kabeln mit elektrischen Leitern auf jedem Fall Leitungstreiber vorgesehen werden, die das Bildschirmsignal oder das Lautsprechersignal des Rechners verstärken und weiterhin auch Leitungstreiber vorgesehen sein, die die Eingaben der Tastatur oder der Maus-Bedieneinheit verstärken.

Besonders vorteilhaft umfaßt ein Kabel jedoch einen Lichtwellenleiter, weil hierdurch problemlos erheblich höhere Datenmengen pro Zeiteinheit übertragen werden. Insbesondere durch eine derartige Ausgestaltung des Kabels wird es besonders vorteilhaft möglich daß von wenigstens zwei der nachfolgend genannten Einheiten die Daten über eine gemeinsame Leitung des Kabels geleitet werden:
- der Bildschirm (33)
- die Tastatur (23)
- die Mausbedieneinheit (26)
- der Lautsprecher (31)

Natürlich wird man besonders vorteilhaft die Daten aller eben genannten Einheiten über eine gemeinsame Leitung des Kabels leiten.

Weiterhin kann ein Sendermodul vorgesehen werden an dem Rechnerseitig das besagte Kabel angeschlossen ist und das zusätzlich Anschlüsse für eine Tastatur und/oder eine Mausbedieneinheit und/oder einen Bildschirm und/oder einen Lautsprecher vorgesehen ist. Hierüber können neben dem Bildschirm, der Tastatur, der Mausbedieneinheit und dem Lautsprecher im Bedienpult dieselben Einheiten auch Rechnerseitig vorgesehen werden, sodaß der Rechner sowohl vom Bedienpult aus bedient werden kann, wie auch unmittelbar am Rechner.

Die Bedieneinheit kann hierbei sowohl bei allen erdenklichen Arten von Werkzeugmaschinen, wie beispielsweise CNC-Fräsmaschinen oder CNC-Drehmaschinen eingesetzt werden, wie auch bei den unterschiedlichsten Koordinatenmeßgeräten, wie beispielsweise Ständenneßgeräten, Portalmeßgeräten oder Brückenmeßgeräten, die entweder mit Antrieben versehen sind oder aber manuell verfahren werden.

Weitere Vorteile und Weiterbildungen der Erfindung ergeben sich aus der Beschreibung der Figuren. Hierin zeigen:
- Figur 1: ein Koordinatenmeßgerät mit einer erfindungsgemäßen Bedieneinheit;
- Figur 2: ein Bedienpult (6) in der Aufsicht;
- Figur 3: eine rein schematische Prinzipskizze der wesentlichen Komponenten der erfindungsgemäßen Bedieneinheit.
- Figur 4: eine rein schematische Prinzipskizze der wesentlichen Komponenten der erfindungsgemäßen Bedieneinheit gemäß einer zweiten Ausführungsform
- Figur 5: eine rein schematische Prinzipskizze eines Sendermoduls (41)
- Figur 6: eine rein schematische Prinzipskizze eines Empfangsmoduls (42).

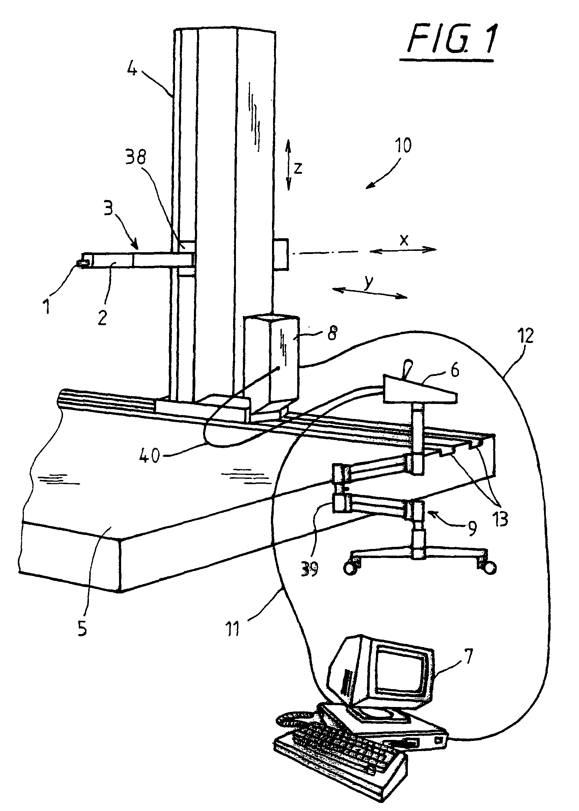

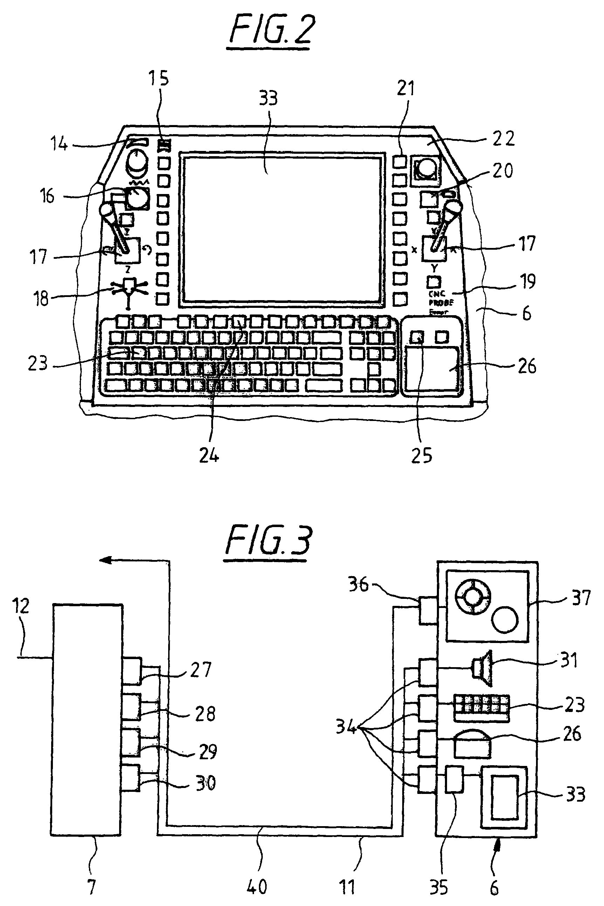

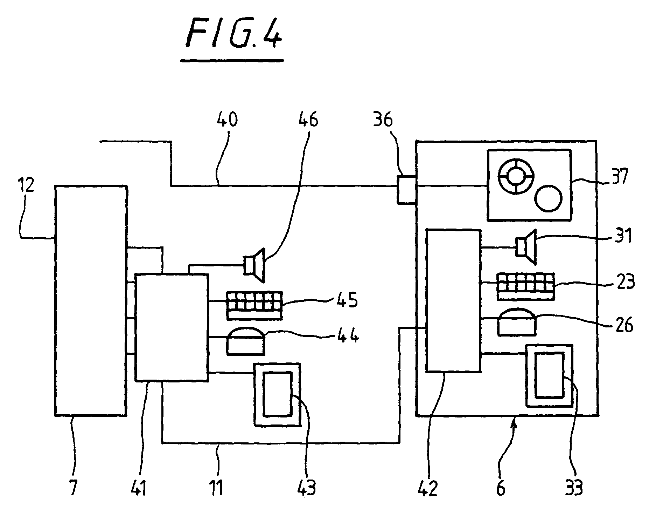

Figur 1 zeigt rein beispielhaft ein Koordinatenmeßgerät (10) mit einer erfindungsgemäßen Bedieneinheit (9). Das Koordinatenmeßgerät weist einen Meßtisch (5) mit Führungen (13) auf, auf denen ein vertikaler Ständer (4) in der mit (y) bezeichneten Richtung mittels hier nicht näher gezeigter Antriebe verfahren werden kann. An dem Ständer (4) ist ein Kreuzschieber (38) in der mit (z) bezeichneten Richtung verfahrbar, wobei der Kreuzschieber (38) wiederum einen horizontal ausgerichteten Meßarm (3) in der mit (x) bezeichneten Richtung verfahrbar lagert. Am Ende des Meßarms (3) ist ein Tastkopf (2) befestigt, der die Berührung eines Taststiftes (1) an einem zu vermessenden Werkstück (hier nicht gezeigt) detektiert. In x-, y- und z-Richtung sind hierbei Maßstäbe angebracht, deren Maßstabswerte von optischen Tastköpfen ausgelesen werden, und deren Meßwerte bei Berührung des Taststiftes (1) mit einem Werkstück durch das im Tastkopf (2) erzeugte Signal als Meßwerte eingefroren werden. Die Steuerung (8), die hierbei die Antriebe steuert und die entsprechenden Meßwerte der Maßstäbe ausliest ist einerseits über das Kabel (12) mit einem Rechner (7) verbunden, in dem u.a. die Meßwerte ausgewertet werden. Andererseits ist die Steuerung (8) auch mit dem Bedienpult (6) über das Kabel (40) verbunden. Das Bedienpult (6) ist hierbei auf einem verfahrbaren Untergestell (39) gelagert. Auf dem Bedienpult (6) sind Bedienelemente, wie Steuerhebel vorgesehen, über die die Antriebe des Koordinatenmeßgerätes (10) verstellt werden können. Zusätzlich ist das Bedienpult (6) erfindungsgemäß über das Kabel (11) auch mit dem Rechner (7) verbunden, wie dies nachfolgend im Zusammenhang mit den Figuren 2 und 3 erläutert wird.

Bevor die genaue Funktion des Bedienpultes im einzelnen erläutert wird, sollen zunächst unter Bezugnahme auf Figur 2, die eine Aufsicht auf das erfindungsgemäße Bedienpult zeigt, die einzelnen Funktionen erläutert werden.

Mit (14) ist hierbei ein Potentiometer zur Geschwindigkeitsregelung bezeichnet, mit (15) sind Funktionstasten bezeichnet die beispielsweise zur Achsklemmung, zur Fahrtrichtungsumkehr etc. vorgesehen sind. (17) bezeichnet zwei Steuerhebel, mit denen das Koordinatenmeßgerät gemäß Figur 1 in den Koordinatenrichtungen x- y und z verfahren werden kann. Die Bezugszeichen (18, 19) bezeichnen LED Anzeigen die unterschiedliche Betriebszustände des Koordinatenmeßgerätes anzeigen. Das Bezugszeichen (22) zeigt den Notausschalter, die Bezugszeichen (23, 24) zeigen die Tasten und Funktionstasten einer Standard PC Tastatur. Mit (25, 26) ist eine Maus-Bedieneinheit mit den zugeordneten Maustasten gezeigt. Das Bezugszeichen (33) bezeichnet einen TFT Bildschirm.

Die Bezugszeichen (14 - 22) bezeichnen mithin Bedienelemente die mit der Steuerung (8) des Koordinatenmeßgerätes verbunden sind, während die Bezugszeichen (23 - 26) d.h. also die Tastatur und die Maus-Bedieneinheit (25,26), Bedienelemente bezeichnen, die mit dem Rechner (7) des Koordinatenmeßgerätes (10) verbunden sind. Auch der Bildschirm (33) ist mit dem Rechner (7) des Koordinatenmeßgerätes verbunden.

Die erfindungsgemäße Bedieneinheit soll nunmehr anhand von Figur 3 erläutert werden. Figur 3 zeigt hierbei eine reine Prinzipskizze in der unter anderem wesentliche Komponenten der Bedieneinheit gezeigt sind.

Wie hierbei zu sehen ist, weist das Bedienpult (6) die Maus-Bedieneinheit (26), die Tastatur (23), einen Lautsprecher (31) und den Bildschirm (33) auf, wobei diese Elemente alle mit dem Rechner (7) zusammenarbeiten. Dazu sind an die Standardanschlüsse des Rechners hierbei jeweils Leitungstreiber (27, 28, 29, 30) angeschlossen.

Die Übertragung soll nunmehr rein beispielhaft für den Bildschirm (33) erläutert werden. Hierzu ist zunächst an den Standardanschluß des Rechners, d.h. also in diesem Falle die Steckerleiste der Graphikkarte, an die normalerweise der Monitor angeschlossen wird, der Leitungstreiber (30) angeschlossen, der das Bildschirmsignal zunächst verstärkt. Dieses verstärkte Bildschirmsignal wird dann über das Kabel (11) an den Eingang (34) am Bedienpult (6) übertragen, der das empfangene Bildschirmsignal dann an den Wandler (35) weiter reicht. Der Wandler (35) ist hierbei derart ausgestaltet, daß er aus dem empfangenen Bildschirmsignal automatisch die Bildauflösung des Rechners (7) ermittelt und das Bildschirmsignal des Rechners (7) so expandiert oder komprimiert, daß unabhängig von der Bildauflösung des durch den Rechner (7) abgegebenen Bildschirmsignals der gesamte Inhalt des Bildschirms (33) auf dem Bedienpult mit dem Bildschirminhalt des Rechners (7) ausgefüllt ist. Vollkommen analog hierzu ist der Leitungstreiber (27) für den Lautsprecher (31) in die Ausgangsbuchse der Soundkarte eingesteckt, wobei dieser das betreffende Signal der Soundkarte verstärkt und über das Kabel (11) an den Lautsprecher (31) überträgt. Der Leitungstreiber (28) ist an der seriellen Schnittstelle für die Tastatur angeschlossen und empfängt die von der Tastatur (23) im Bedienpult (6) abgesandten Codes und sendet diese weiter an die betreffende Schnittstelle. Der Leitungstreiber (29) ist an der seriellen Schnittstelle angeschlossen, an der üblicherweise die Maus angeschlossen wird. Auch dieser Leitungstreiber empfängt die von der Maus-Bedieneinheit (26) im Bedienpult (6) abgegebenen Impulse und leitet diese an den Rechner (7) weiter.

Hierdurch ist es nunmehr in erfindungsgemäßer Weise möglich, entfernt vom Rechner (7) auf dem Bedienpult (6) den gesamten Bildschirminhalt des Rechners (7) zu empfangen sowie den Rechner über die Tastatur (23) und die Maus-Bedieneinheit (26) zu bedienen. Die anderen Bedienelemente, wie beispielsweise die Steuerhebel (17) sind in Figur 3 mit dem Bezugszeichen (37) zusammengefaßt, wobei diese in üblicher Weise die Antriebe des Koordinatenmeßgerätes (10) ansteuern und andere Funktionen, wie beispielsweise die Taststiftklemmung etc. auslösen können. Diese Bedienelemente sind über das Kabel (40) mit der Steuerung (8) des Koordinatenmeßgerätes verbunden, wobei diese Verbindung als Bus ausgebildet ist.

Figur 4 zeigt ein zweites, besonders vorteilhaftes Ausführungsbeispiel einer erfindungsgemäßen Bedieneinheit. Hierin werden die Signale zwischen dem Rechner (7) und dem Bedienpult (6) alle über nur eine einzige Leitung im Kabel (11) übertragen. Damit die großen Datenraten bewältigt werden können umfaßt das Kabel (11) in diesem Ausführungsbeispiel einen Lichtwellenleiter. Hierzu ist ein Sendemodul (41) unmittelbar an die oben bereits beschriebenen Standardanschlüsse des Rechners (7) für den Bildschirm, die Tastatur, die Maus und die Soundkarte angeschlossen. Das Sendemodul (41) wandelt hierbei die vom Rechner (7) kommenden Signale, wie beispielsweise das Bildschirmsignal in einen digitalen seriellen Datenstrom um, der über das Kabel (11), hier also den Lichtwellenleiter zu einem Empfangsmodul (42) im Bedienpult (6) übertragen wird und hier wieder aufbereitet an die entsprechend angeschlossenen Bedienelemente, d. h. also den Lautsprecher (31); die Tastatur (23), die Mausbedieneinheit (26) und den Bildschirm (33) weitergereicht wird. In entsprechender Weise werden auch die Signale der Mausbedieneinheit (26) und der Tastatur (23) im Empfangsmodul (42) in einen digitalen seriellen Datenstrom umgewandelt und über das Kabel (11) an das Sendemodul (41) übertragen und von diesem aufbereitet an den Rechner (7) weitergereicht. Der oben beschriebene Wandler (35), der aus dem empfangenen Bildschirmsignal automatisch die Bildauflösung des Rechners (7) ermittelt und das Bildschirmsignal des Rechners (7) so expandiert oder komprimiert, daß unabhängig von der Bildauflösung des durch den Rechner (7) abgegebenen Bildschirmsignals der gesamte Inhalt des Bildschirms (33) auf dem Bedienpult mit dem Bildschirminhalt des Rechners (7) ausgefüllt ist, befindet sich bei diesem Ausführungsbeispiel im Sendemodul (41).

Zusätzlich weist das Sendemodul (41) Anschlüsse für einen weiteren Lautsprecher (46), eine weitere Tastatur (45), eine weitere Mausbedieneinheit (44) und einen weiteren Bildschirm (43) auf, sodaß zusätzlich auch unmittelbar am Rechner (7) alle notwendigen Komponenten zur Bedienung des Rechners (7) vorgesehen sind.

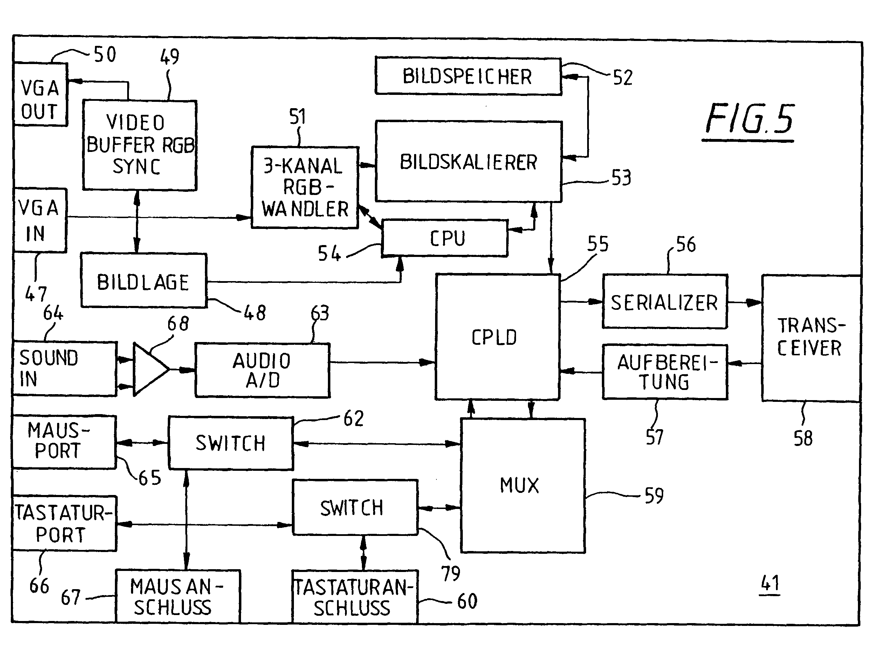

Das Sendemodul (41) soll anhand von Figur 5 näher erläutert werden. Zunächst wird dazu wieder die Verarbeitung des Bildschirmsignals beschrieben. Hierzu wird das von der Graphikkarte des Rechners (7) abgegriffene Bildschirmsignal vom Eingang (47) einerseits an einen Videobuffer (49) übergeben, der die analogen RGB-Eingangsignale über einen dreikanaligen Verstärker puffert. Die Abkürzung RGB steht hierbei für Rot, Grün und Blau. Genauso werden auch die Synchronisationssignale, also der horizontale Synchronisationsimpuls, den wir zukünftig mit HSYNC bezeichnen werden und der vertikale Synchronisationsimpuls, den wir zukünftig mit VSYNC bezeichnen werden gepuffert, wobei die betreffenden Signale dann zeitrichtig am den Ausgang (50) anliegen und vom Bildschirm (43) angezeigt werden können.

Andererseits wird das vom Rechner (7) abgegriffene Bildschirmsignal vom Eingang (47) an einen Drei-Kanal-RGB-Wandler (51) übergeben. Hierin ist zunächst ein schneller Analog-Digitalwandler vorgesehen, der die analogen RGB-Eingangssignale auf drei Kanälen zu je acht Bit digitalisiert. Damit ist also für jede Farbe ein Kanal vorgesehen. Außerdem wird das Bildschirmsignal auch an den Bildlageregler (48) übergeben, der eine Reihe von Parametern des Eingangstimings mißt. Diese Parameter umfassen die horizontale Zeilendauer, Dauer und Polarität von HSYNC, Punktezahl einer Zeile, Phasenlage von Bildpunkten zum Abtasttakt, Zeilenzahl pro Bild, Beginn und Ende des aktiven Bildbereiches sowie Start- und Endzeile des aktiven Bildbereiches. Diese gemessenen Meßwerte werden dann an eine CPU (54) übergeben, die diese mit plausiblen Timings, wie z.B. VESA-Standardtimings, vergleicht und so für den Drei-Kanal-RGB-Wandler (51), den Bildskalierer (53) und den Bildspeicher (52) Parametersätze ableitet. Für den Drei-Kanal-RGB-Wandler (51) lierfert der Bildlageregler (48) hierbei die Abtastfrequenz, in der die analogen RGB-Eingangssignale digitalisiert werden. Die digitalisierten RGB-Eingangssignale und die Synchronisationssignale HSYNC und VSYNC werden dann an den Bildskalierer (53) übergeben.

Der Bildskalierer (53) führt daraufhin die Expansion oder Kompression des Bildschirmsignales durch. Dazu wird über digitale Filter mit programmierbaren Koeffizienten der aktive Bildschirminhalt der Ursprungsdaten in die Zielauflösung umgerechnet. Die Skalierung kann sowohl in horizontaler Richtung wie auch in vertikaler Richtung in weiten Grenzen mit einem Skalierungsfaktor von 0,34 bis 2,95 erfolgen. Ein Skalierungsfaktor von kleiner als 1 bedeutet dabei eine Verkleinerung in der betreffenden Achse, ein Skalierungsfaktor größer als 1 eine Vergrößerung. Die Skalierung wird hierbei ebenfalls von der CPU (54) gesteuert, wobei die CPU (54) in horizontaler Richtung wie auch in vertikaler Richtung so skaliert, daß der gesamte Inhalt des Bildschirms (33) auf dem Bedienpult mit dem Bildschirminhalt des Rechners (7) ausgefüllt ist. Das skalierte Ergebnis wird dann im Bildspeicher (52) abgelegt.

Der Bildskalierer (53), der Bildspeicher (52), der drei-Kanal-RGB-Wandler (51), der Bildlageregler (48) und die CPU (54) übernehmen hierbei die Aufgabe des oben beschriebenen Wandlers (35) der aus dem empfangenen Bildschirmsignal automatisch die Bildauflösung des Rechners (7) ermittelt und das Bildschirmsignal des Rechners (7) so expandiert oder komprimiert, daß unabhängig von der Bildauflösung des durch den Rechner (7) abgegebenen Bildschirmsignals der gesamte Inhalt des Bildschirms (33) auf dem Bedienpult mit dem Bildschirminhalt des Rechners (7) ausgefüllt ist.

Diese skalierten Bilddaten sowie die Synchronisationssignale VSYNC und HSYNC werden an einen CPLD-Baustein (55) übergeben. Bei diesem Baustein handelt es sich um einen programmierbaren Logikbaustein. Dieser hat als wesentliche Funktion unter anderem die Funktionalität eines Multiplexers, der nacheinander die Bilddaten aus dem Bildskalierer (53), sowie, wie weiter unten noch detailliert ausgeführt, die Klangdaten aus der Soundkarte und die Daten der Tastaturschnittstelle und der Mausschnittstelle in die serielle Datenübertragungsstrecke über den Lichtwellenleiter des Kabels (11) einspeist und aus dem Lichtwellenleiter empfangene Daten weiterleitet. Daten die an das Bedienpult (6) gesendet werden sollen, werden dazu an einen Serializer (56) weitergegeben, der eine mehrfache Schiebefrequenz der Eingangsdatenfrequenz erzeugt. Es handelt sich hierbei besonders vorteilhaft um einen integrierten Baustein vom Typ HDMP1024 der Firma Agilent, der eine 24fache Schiebefrequenz der Eingangsdatenfrequenz erzeugt. Die aufbereiteten Daten werden dann in der Schiebefrequenz vom Serializer (56) an einen Fiberoptischen Transceiver (58) übergeben, der die Daten dann in den Lichtwellenleiter einkoppelt.

Daten, die vom Bedienpult (6) gesendet werden, werden hingegen vom Fiberoptischen Transceiver (58) empfangen und vom Signalaufbereiter (57) in digital verarbeitbare Signale umgewandelt. Diese Signale werden dann über den Multiplexbetrieb des CPLD Bausteins (55) an die Mausschnittstelle des Rechners (7) oder die Tastaturschnittstelle des Rechners (7) weitergeleitet, wie dies weiter unten noch näher erläutert wird.

Wie bereits oben ausgeführt, müssen über den Lichtwellenleiter auch die Klanedaten der Soundkarte, die Daten der Mausschnittstelle und die Daten der Tastatur geschickt werden und dazu zur Versendung über den Lichtwellenleiter am CPLD-Baustein (55) anliegen. Der Eingang (64) für die Klangdaten ist hierbei mit dem Ausgang der Soundkarte des Rechners (7) verbunden und wird im Sendemodul an einen Addierverstärker (68) angelegt, der die beiden Stereoeingänge zu einem einzigen Monosignal verarbeitet. Das Monosignal wird dann an einen Audio A/D-Wandler (63) angeschlossen, der das analoge Audiosignal in ein Digitales Signal umwandelt. Das digitale Audiosignal wird dann zur Übermittlung an das Bedienpult (6) an den CPLD-Baustein (55) weitergereicht.

Analog hierzu ist der Mausport (65) mit der Mausschnittstelle des Rechners (7) und der Tastaturport (66) mit der Tastaturschnittstelle des Rechners (7) verbunden. Für die oben beschriebene Übertragung der Daten vom Rechner (7) zur Mausbedieneinheit (26) und zur Tastatur (23) und zum Empfang von Daten von diesen Bedienelementen ist zwischen dem Mausport (65) bzw. dem Tastaturport (66) und dem CPLD-Baustein (55) ein Maus- und Tastaturmultiplexer (59) vorgesehen, der zwischen dem bidirektionalen Punkt zu Punkt-Protokoll der Maus bzw. der Tastatur und dem unidirektionalen Protokoll der Datenübertragung über Lichtwellenleiter konvertiert. Weiterhin sind zwischen Mausport (65) bzw. Tastaturport (66) und dem Maus- und Tastaturmultiplexer (59) jeweils ein automatischer Schalter (62 bzw. 79) vorgesehen, der zwischen dem Empfang von Daten der Mausbedieneinheit (26) bzw. der Tastatur (23) auf dem Bedienpult (6) und dem von einer lokal am Mausanschluß (67) angeschlossenen Maus (44) bzw. einer lokal am Tastaturanschluß (60) angeschlossenen Tastatur (45) umschaltet. Die Umschaltung erfolgt über die Prüfung der Benutzeraktivität, wobei bei einer festgestellten Benutzeraktivität das jeweils andere Bedienelement für eine definierten Zeitraum gesperrt wird.

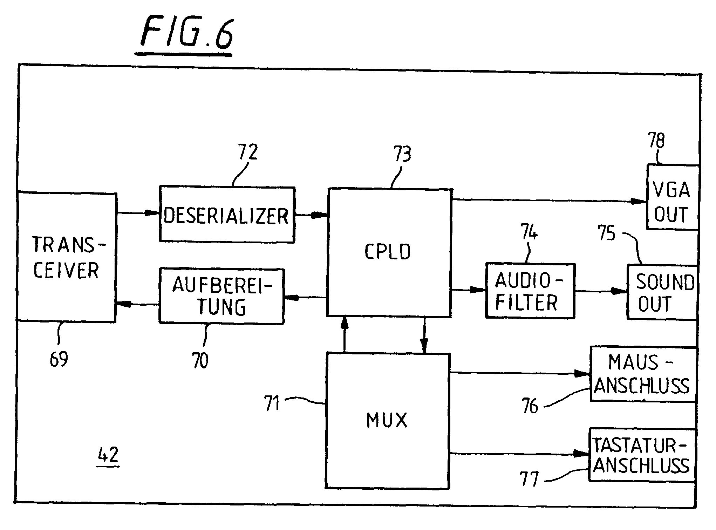

Anhand von Figur 6 soll nunmehr das mit dem Sendemodul (41) zusammenwirkende Empfangsmodul (42) beschrieben werden. Das Empfangsmodul (42) weist zur Kommunikation, ebenso wie das Sendemodul (41) einen Fiberoptischen Transceiver (69) auf, der an das andere Ende des Lichtwellenleiters angeschlossen ist. Die empfangenen Daten werden über einen Deserializer (72) wieder in die ursprünglichen Daten und Steuersignale zurückverwandelt und an einen CPLD Baustein (73) weitergereicht. Dieser trennt aufgrund der Signale des Deserializers (72) die Daten wieder in einzelne Datenströme auf und leitet diese entsprechend weiter. Signale für die Tastatur (23) und die Mausbedieneinheit (26) werden wieder an einen Maus- und Tastaturmultiplexer (71) übergeben, der aus dem unidirektionalen Protokoll wieder ein bidirektionales Punkt-zu-Punkt-Protokoll erstellt und die Daten über den Mausanschluß (76) und den Tastaturanschluß (77) an die Mausbedieneinheit (26) und die Tastatur (23) weiterleitet. Die übertragenen Klangdaten werden über einen im CPLD-Baustein befindlichen Digital-Analogwandler zunächst wieder in ein analoges Signal gewandelt und dann an ein Audiofilter (74) übergeben, das die bei der Wandlung entstehenden Hochfrequenzanteile herausfiltert, bevor das Klangsignal über den Ausgang (75) an den Lautsprecher (31) gesandt wird. Aus dem vom Deserializer (72) empfangenen Datenstrom wird darüber hinaus auch wieder das Bildsignal mit allen Bilddaten und Display-Steuersignalen hergestellt und über den Ausgang (78) an den Bildschirm (33), in diesem Falle ein TFT-Display, übergeben. Damit das TFT-Display angesteuert werden kann müssen die aus dem Datenstrom abgeleiteten Bildinhalte zunächst in eine Registerbank gespeichert werden, die die Bilddaten dann abwechselnd in einen digitalen "EVEN" und einen "ODD"-Datenstrom demultiplext und anschließend synchronisiert. Die Signale HSYNC und VSYNC sowie Display-Enable können unmittelbar aus dem Datenstrom entnommen werden.

Von der Mausbedieneinheit (26) und von der Tastatur (23) kommende Signale werden in umgekehrter Reihenfolge über den Maus- und Tastaturmultiplexer vom bidirektionalen Punkt-zu-Punkt-Protokoll in ein unidirektionales Protokoll für die Lichtwellenleiterübertragung umgewandelt und über den CPLD-Baustein (73) an eine Aufbereitung (70) übergeben, die die Daten in einen vom Transceiver (69) übermittelbaren Datenstrom überführt.

Die Anschlüsse (75 bis 78) sind hierbei in Form einer Steckerleiste realisiert, damit das Empfangsmodul variabel an unterschiedlichen Bedienpulten befestigt werden kann.

Es versteht sich, daß die Erfindung in vielfältiger Weise variiert werden kann. Beispielsweise ist es möglich auf dem Bedienpult (6) auch Lesegeräte für Datenträger, wie beispielsweise Floppy-Laufwerke oder CD-Rom-Laufwerke vorzusehen, über die vom entfernten Rechner (7) Daten eingelesen werden können.

## Patentansprüche

1. Bedieneinheit (9) für eine Werkzeugmaschine oder ein Koordinatenmeßgerät (10) umfassend
- ein an unterschiedlichen Orten platzierbares Bedienpult (6) mit wenigstens einem Bedienelement (23, 26) und einem Bildschirm (33), wobei das Bedienelement (23, 26) und der Bildschirm (33) mit einem Rechner (7) einer Werkzeugmaschine oder eines Koordinatenmeßgerätes (10) verbunden werden können,
- einen Wandler (35), der das Bildschirmsignal des Rechners (7) so expandiert oder komprimiert, daß unabhängig von der Bildauflösung des durch den Rechner (7) abgegebenen Bildschirmsignals der gesamte Inhalt des Bildschirms (33) auf dem Bedienpult mit dem Bildschirminhalt des Rechners ausgefüllt ist.
- ein Kabel (11) umfassend einen Lichtwellenleiter, über den die Signale zwischen dem Rechner (7) und dem Bedienpult (6) übertragen werden.

2. Koordinatenmeßgerät (10) umfassend
- einen Rechner (7) zur Auswertung der Meßergebnisse,
- eine Bedieneinheit (9) mit
- einem an unterschiedlichen Orten platzierbaren Bedienpult (6) mit wenigstens einem Bedienelement (23, 26) und einem Bildschirm (33), wobei das Bedienelement (23, 26) und der Bildschirm (33) mit dem Rechner (7) verbunden sind
- einem Wandler (35) der das Bildschirmsignal des Rechners (7) so expandiert oder komprimiert, daß unabhängig von der Bildauflösung des durch den Rechner (7) abgegebenen Bildschirmsignales der gesamte Inhalt des Bildschirms (33) auf dem Bedienpult (6) mit dem Bildschirminhalt des Rechners ausgefüllt ist.
- einem Kabel (11) umfassend einen Lichtwellenleiter, über den die Signale zwischen dem Rechner (7) und dem Bedienpult (6) übertragen werden

3. Koordinatenmeßgerät oder Bedieneinheit nach Anspruch 1 oder 2, **dadurch gekennzeichnet, daß** der Wandler (35) automatisch aus dem Bildschirmsignal des Rechners (7) die Bildauflösung des Rechners ermittelt und entsprechend an den Bildschirm (33) des Bedienpultes (6) anpaßt.

4. Koordinatenmeßgerät oder Bedieneinheit nach einem der Ansprüche 1-3, **dadurch gekennzeichnet, daß** das Bedienpult (6) als Bedienelemente eine Tastatur (23) und/oder eine Maus-Bedieneinheit (26) aufweist, die ebenfalls mit dem Rechner (7) verbunden sind, so daß die Eingabe der Bedienelemente an den Rechner (7) weitergeleitet wird.

5. Koordinatenmeßgerät oder Bedieneinheit nach einem der Ansprüche 1 - 4, **dadurch gekennzeichnet daß** das Bedienpult einen Lautsprecher (31) aufweist, der ebenfalls mit dem Rechner (7) verbunden ist und die Klangausgaben des Rechners ausgibt.

6. Koordinatenmeßgerät oder Bedieneinheit nach einem der Ansprüche 1- 5, **dadurch gekennzeichnet, daß** der Bildschirm (33) und/oder die Bedienelemente (23,26) und/oder der Lautsprecher (31) mit den Standardanschlüssen am Rechner (7) verbunden sind.

7. Koordinatenmeßgerät oder Bedieneinheit nach einem der Ansprüche 1-6, **dadurch gekennzeichnet, daß** die Bedieneinheit Leitungstreiber (27, 30) umfaßt, die das Bildschirmsignal und/oder das Lautsprechersignal des Rechners verstärken.

8. Koordinatenmeßgerät oder Bedieneinheit nach einem der Ansprüche 1-7, **dadurch gekennzeichnet, daß** die Bedieneinheit Leitungstreiber (28,29) umfaßt, die das Signal der Tastatur (23) und/oder das Signal der Maus-Bedieneinheit (26) verstärken.

9. Koordinatenmeßgerät nach einem der Ansprüche 1-8, **dadurch gekennzeichnet, daß** das Koordinatenmeßgerät Antriebe aufweist und daß auf dem Bedienpult (6) zusätzlich Bedienelemente (14, 15,17, 18) vorgesehen sind, die mit der Steuerung (8) des Koordinatenmeßgerätes verbunden sind und der Steuerung der Antriebe dienen.

10. Koordinatenmeßgerät oder Bedieneinheit nach einem der Ansprüche 1- 9, **dadurch gekennzeichnet, daß** die Bedienelemente (23,26) und/oder der Bildschirm (33) und/oder der Lautsprecher (31) mit dem Rechner (7) über das Kabel (11) verbunden sind.

11. Koordinatenmeßgerät oder Bedieneinheit nach Anspruch 10, **dadurch gekennzeichnet, daß** die Bedieneinheit so ausgestaltet ist daß von wenigstens zwei der nachfolgend genannten Einheiten die Daten über den Lichtwellenleiter des Kabels (11) geleitet werden:
- der Bildschirm (33)
- die Tastatur (23)
- die Mausbedieneinheit (26)
- der Lautsprecher (31).

12. Koordinatenmeßgerät oder Bedieneinheit nach einem der Ansprüche 1-11 **dadurch gekennzeichnet, daß** ein Sendermodul (41) vorgesehen ist, an dem Rechnerseitig das Kabel (11) angeschlossen ist und an dem zusätzlich Anschlüsse für eine Tastatur (45) und/oder eine Mausbedieneinheit (44) und/oder einen Bildschirm (43) und/oder einen Lautsprecher (46) vorgesehen sind.

13. Koordinatenmeßgerät oder Bedieneinheit nach einem der Ansprüche 1-12 **dadurch gekennzeichnet, daß** der Wandler (35) im Bedienpult angeordnet ist oder daß der Wandler (48 und 51-54) im Sendermodul (41) angeordnet ist

14. Koordinatenmeßgerät oder Bedieneinheit nach einem der Ansprüche 1-13, **dadurch gekennzeichnet, daß** auf dem Bedienpult (6) zusätzlich wenigstens ein Lesegerät für Datenträger vorgesehen ist, das mit dem Rechner (7) verbindbar ist und über das der Rechner (7) Daten von einem Datenträger einlesen kann.

## Claims

1. Control unit (9) for a machine tool or co-ordinate measuring equipment (10) comprising
- a control panel (6) which can be placed at different locations and has at least one control element (23, 26) and a screen (33), with it being possible for the control element (23, 26) and the screen (33) to be connected to a computer (7) of a machine tool or co-ordinate measuring equipment (10),
- a transducer (35) which expands or compresses the screen signal from the computer (7) in such a manner that the entire contents of the screen (33) on the control panel are filled with the computer's screen contents irrespective of the image resolution of the screen signal emitted by the computer (7),
- a cable (11) comprising an optical waveguide which is used to transmit the signals between the computer (7) and the control panel (6).

2. Co-ordinate measuring equipment (10) comprising
- a computer (7) for evaluating the measurement results,
- a control unit (9) having
- a control panel (6) which can be placed at different locations and has at least one control element (23, 26) and a screen (33), with the control element (23, 26) and the screen (33) being connected to the computer (7),
- a transducer (35) which expands or compresses the screen signal from the computer (7) in such a manner that the entire contents of the screen (33) on the control panel (6) are filled with the computer's screen contents irrespective of the image resolution of the screen signal emitted by the computer (7),
- a cable (11) comprising an optical waveguide which is used to transmit the signals between the computer (7) and the control panel (6).

3. Co-ordinate measuring equipment or control unit according to Claim 1 or 2, **characterized in that** the transducer (35) automatically uses the screen signal from the computer (7) to determine the image resolution of the computer and accordingly matches it to the screen (33) on the control panel (6).

4. Co-ordinate measuring equipment or control unit according to one of Claims 1 - 3, **characterized in that** the control panel (6) has, as control elements, a keyboard (23) and/or a mouse control unit (26) which are likewise connected to the computer (7) so that the input from the control elements is forwarded to the computer (7).

5. Co-ordinate measuring equipment or control unit according to one of Claims 1 - 4, **characterized in that** the control panel has a loudspeaker (31) which is likewise connected to the computer (7) and outputs the sound outputs from the computer.

6. Co-ordinate measuring equipment or control unit according to one of Claims 1 - 5, **characterized in that** the screen (33) and/or the control elements (23, 26) and/or the loudspeaker (31) are/is connected to the standard connections on the computer (7).

7. Co-ordinate measuring equipment or control unit according to one of Claims 1 - 6, **characterized in that** the control unit comprises line drivers (27, 30) which amplify the screen signal and/or the loudspeaker signal from the computer.

8. Co-ordinate measuring equipment or control unit according to one of Claims 1 - 7, **characterized in that** the control unit comprises line drivers (28, 29) which amplify the signal from the keyboard (23) and/or the signal from the mouse control unit (26).

9. Co-ordinate measuring equipment according to one of Claims 1 - 8, **characterized in that** the co-ordinate measuring equipment has drives, and **in that** control elements (14, 15, 17, 18) which are connected to the controller (8) of the co-ordinate measuring equipment and are used to control the drives are additionally provided on the control panel (6).

10. Co-ordinate measuring equipment or control unit according to one of Claims 1 - 9, **characterized in that** the control elements (23, 26) and/or the screen (33) and/or the loudspeaker (31) are/is connected to the computer (7) via the cable (11).

11. Co-ordinate measuring equipment or control unit according to Claim 10, **characterized in that** the control unit is configured in such a manner that at least two of the units which are mentioned below pass the data via the optical waveguide of the cable (11):
- the screen (33)
- the keyboard (23)
- the mouse control unit (26)
- the loudspeaker (31)

12. Co-ordinate measuring equipment or control unit according to one of Claims 1-11, **characterized in that** a transmitter module (41) is provided, to which the cable (11) is connected at the computer end and on which connections for a keyboard (45) and/or a mouse control unit (44) and/or a screen (43) and/or a loudspeaker (46) are additionally provided.

13. Co-ordinate measuring equipment or control unit according to one of Claims 1 - 12, **characterized in that** the transducer (35) is arranged in the control panel, or **in that** the transducer (48 and 51-54) is arranged in the transmitter module (41).

14. Co-ordinate measuring equipment or control unit according to one of Claims 1 - 13, **characterized in that** at least one reader for data storage media is additionally provided on the control panel (6), can be connected to the computer (7) and can be used by the computer (7) to read data from a data storage medium.

## Revendications

1. Unité de commande (9) pour une machine-outil ou un appareil (10) de mesure de coordonnées, comprenant
- un pupitre de commande (6) pouvant être placé en différents endroits, avec au moins un élément de commande (23, 26) et un écran (33), l'élément de commande (23, 26) et l'écran (33) pouvant être reliés à un ordinateur (7) d'une machine-outil ou d'un appareil (10) de mesure de coordonnées,
- un convertisseur (35), qui dilate ou comprime le signal d'écran de l'ordinateur (7) de telle sorte que, indépendamment de la résolution d'image du signal d'écran délivré par l'ordinateur (7), le contenu de l'écran (33) du pupitre de commande est rempli dans sa totalité par le contenu d'écran de l'ordinateur,
- un câble (11) comprenant un conducteur optique par l'intermédiaire duquel sont transmis les signaux entre l'ordinateur (7) et le pupitre de commande (6).

2. Appareil (10) de mesure de coordonnées comprenant
- un ordinateur (7) pour exploiter les résultats de mesure,
- une unité de commande (9) avec
- un pupitre de commande (6) pouvant être placé en différents endroits, avec au moins un élément de commande (23, 26) et un écran (33), l'élément de commande (23, 26) et l'écran (33) étant reliés à l'ordinateur (7),
- un convertisseur (35), qui dilate ou comprime le signal d'écran de l'ordinateur (7) de telle sorte que, indépendamment de la résolution d'image du signal d'écran délivré par l'ordinateur (7), le contenu de l'écran (33) du pupitre de commande (6) est rempli dans sa totalité par le contenu d'écran de l'ordinateur,
- un câble (11) comprenant un conducteur optique par l'intermédiaire duquel sont transmis les signaux entre l'ordinateur (7) et le pupitre de commande (6).

3. Appareil de mesure de coordonnées ou unité de commande selon la revendication 1 ou 2, **caractérisé en ce que** le convertisseur (35) détermine automatiquement la résolution d'image de l'ordinateur à partir du signal d'écran de l'ordinateur (7), et l'adapte d'une manière appropriée à l'écran (33) du pupitre de commande (6).

4. Appareil de mesure de coordonnées ou unité de commande selon l'une quelconque des revendications 1 à 3, **caractérisé en ce que** le pupitre de commande (6) présente comme éléments de commande un clavier (23) et/ou une unité (26) de commande par souris, qui sont également reliés à l'ordinateur (7), de sorte que l'introduction de données via les éléments de commande est transmise à l'ordinateur (7).

5. Appareil de mesure de coordonnées ou unité de commande selon l'une quelconque des revendications 1 à 4, **caractérisé en ce que** le pupitre de commande présente un haut-parleur (31) qui est également relié à l'ordinateur (7) et délivre les sorties de son de l'ordinateur.

6. Appareil de mesure de coordonnées ou unité de commande selon l'une quelconque des revendications 1 à 5, **caractérisé en ce que** l'écran (33) et/ou les éléments de commande (23, 26) et/ou le haut-parleur (31) sont reliés aux connexions standard de l'ordinateur (7).

7. Appareil de mesure de coordonnées ou unité de commande selon l'une quelconque des revendications 1 à 6, **caractérisé en ce que** l'unité de commande comprend des amplificateurs de ligne (27, 30) qui amplifient le signal d'écran et/ou le signal de haut-parleur de l'ordinateur.

8. Appareil de mesure de coordonnées ou unité de commande selon l'une quelconque des revendications 1 à 7, **caractérisé en ce que** l'unité de commande comprend des amplificateurs de ligne (28, 29) qui amplifient le signal du clavier (23) et/ou le signal de l'unité (26) de commande par souris.

9. Appareil de mesure de coordonnées selon l'une quelconque des revendications 1 à 8, **caractérisé en ce que** l'appareil de mesure de coordonnées présente des entraînements, et **en ce qu'**il est en outre prévu sur le pupitre de commande (6) des éléments de commande (14, 15, 17, 18) qui sont reliés à la commande (8) de l'appareil de mesure de coordonnées et servent à commander les entraînements.

10. Appareil de mesure de coordonnées ou unité de commande selon l'une quelconque des revendications 1 à 9, **caractérisé en ce que** les éléments de commande (23, 26) et/ou l'écran (33) et/ou le haut-parleur (31) sont reliés à l'ordinateur (7) par l'intermédiaire du câble (11).

11. Appareil de mesure de coordonnées ou unité de commande selon la revendication 10, **caractérisé en ce que** l'unité de commande est conçue de telle sorte que les données provenant d'au moins deux des unités suivantes sont transmises par l'intermédiaire du conducteur optique du câble (11) .
- l'écran (33)
- le clavier (23)
- l'unité (26) de commande par souris
- le haut-parleur (31).

12. Appareil de mesure de coordonnées ou unité de commande selon l'une quelconque des revendications 1 à 11, **caractérisé en ce qu'**il est prévu un module émetteur (41) auquel est raccordé côté ordinateur le câble (11) et sur lequel sont en outre prévus des branchements pour un clavier (45) et/ou une unité (44) de commande par souris et/ou un écran (43) et/ou un haut-parleur (46).

13. Appareil de mesure de coordonnées ou unité de commande selon l'une quelconque des revendications 1 à 12, **caractérisé en ce que** le convertisseur (35) est disposé dans le pupitre de commande, ou **en ce que** le convertisseur (48 et 51 à 54) est disposé dans le module émetteur (41).

14. Appareil de mesure de coordonnées ou unité de commande selon l'une quelconque des revendications 1 à 13, **caractérisé en ce qu'**il est en outre prévu sur le pupitre de commande (6) au moins un appareil de lecture pour des supports de données, qui peut être relié à l'ordinateur (7) et par l'intermédiaire duquel l'ordinateur (7) peut lire des données provenant d'un support de données.
